# FASCICULE DE BREVET EUROPEEN

(11) **EP 3 095 565 B1**
(45) Date de publication et mention de la délivrance du brevet: **15.11.2017**
(21) Numéro de dépôt: 16169257.9
(22) Date de dépôt: 11.05.2016
(51) Int. Cl.: B25J 9/16

(54) **PROCEDE ET INSTALLATION DE DECROCHAGE DE PIECES SUSPENDUES SUR DES CROCHETS**
VERFAHREN UND ANLAGE ZUM ABHÄNGEN VON AN HAKEN AUFGEHÄNGTEN TEILEN
METHOD AND FACILITY FOR UNHOOKING PARTS HANGING ON HOOKS

(30) Priorité: 13.05.2015 FR 1554287
(43) Date de publication de la demande: 23.11.2016
(73) Titulaire: Sileane, 42000 Saint-Etienne (FR)
(72) Inventeur: HENRY, Hervé, Emmanuel, 42210 SAINT CYR LES VIGNES (FR); REYNARD, Julien, 63160 MONTMORIN (FR)
(74) Mandataire: Cabinet Laurent & Charras

(56) Documents cités:
- FR-A1- 2 670 190
- FR-A1- 2 986 731

## Description

### DOMAINE TECHNIQUE

La présente invention se rapporte au secteur technique de l'accrochage de pièces sur des crochets, en vue d'un traitement ultérieur, et concerne plus particulièrement un procédé et une installation de décrochage desdites pièces.

L'opération de décrochage consiste à retirer les pièces de l'emprise des crochets et à les déposer sur un moyen de réception.

Plus précisément, dans les industries automobiles, cosmétiques, ou horlogères par exemple, il est souvent nécessaire, dans le cadre de la production de pièces quelconques, de les suspendre sur une pluralité de crochets répartis en rangées sur la surface d'un support plan. Par crochet, on entend tout élément filiforme permettant de suspendre une pièce, telle que par exemple une tige, une griffe, une épingle ou un crochet proprement dit. Lesdites pièces sont ensuite destinées à subir un traitement ultérieur tel qu'une métallisation, une galvanisation par exemple ou tout autre traitement. Ces pièces sont suspendues sur les crochets tels que définis pour limiter le contact du support avec lesdites pièces et réaliser par exemple l'opération de métallisation de manière homogène sur toute la surface de ladite pièce. Une fois le traitement terminé, il est nécessaire de décrocher les pièces par exemple.

### ART ANTERIEUR

Dans l'état de la technique actuel, il n'apparait aucune installation ou procédé permettant de réaliser un décrochage automatique de pièces suspendues sur des crochets répartis en rangées sur la surface d'un support plan. Dans les industries précitées par exemple, les opérations de décrochage des pièces, après leur traitement, sont effectuées manuellement par un opérateur, et généralement pièce par pièce.

Il apparaît bien sûr tout à fait évident que le fait de réaliser ces opérations manuellement comprend un certain nombre d'inconvénients en termes de productivité et de pénibilité, et de risque de d'endommagement des pièces.

Généralement, les crochets destinés à recevoir les pièces à traiter, sont répartis de façon régulière sur toute la surface du support plan et leur forme n'est pas répétable d'un crochet à l'autre. Il apparaît alors difficile de réaliser des opérations de décrochage automatique des pièces par la programmation d'un seul mouvement de décrochage d'un système polyarticulé. Le document FR-A-2 670 190 montre un procédé et une installation de décrochage de pièces suspendues sur des crochets.

### EXPOSE DE L'INVENTION

L'invention vise à proposer un procédé et une installation permettant un décrochage automatique de pièces suspendues sur des crochets répartis en rangées sur la surface d'un support plan.

Un autre objectif de l'invention est de fournir une installation et un procédé permettant de réaliser ledit décrochage de manière rapide et efficace, et donc d'augmenter significativement la productivité d'une chaine de production mettant en oeuvre le procédé selon l'invention.

L'invention a également pour objectif de permettre un décrochage automatique d'une pluralité de pièces suspendues sur des crochets, indépendamment de l'inconvénient lié à la non-répétabilité de l'opération. Le décrochage est automatique, rapide et adapté à tout type de crochet.

L'invention vise aussi à fournir un procédé et une installation permettant un décrochage automatique des pièces jusqu'à leur dépose sur un moyen de réception, tel qu'un convoyeur, ou bien un moyen de réception du type comprenant des alvéoles de réception, par exemple de formes complémentaires aux pièces.

Pour résoudre les problèmes précités, il a été mis au point un procédé de décrochage automatique de pièces suspendues sur des crochets répartis en rangées sur la surface d'un support plan.

Selon l'invention, le procédé comprend des étapes consistant à :
- positionner automatiquement au moins un moyen support sous toute ou partie d'une rangée de crochets pour supporter lesdites pièces, et ;
- déplacer automatiquement ledit moyen support, de manière relative par rapport au support plan, selon une trajectoire correspondant au profil général des crochets jusqu'à ce que lesdites pièces échappent à l'emprise desdits crochets, lesdites pièces se retrouvant posées sur le moyen support ;
- déposer lesdites pièces sur un moyen de réception.

Ainsi, un tel procédé permet alors un décrochage automatique de pièces suspendues sur des crochets répartis en rangées sur la surface d'un support plan. Les pièces sont décrochées automatiquement et par rangées de sorte que l'opération est rapide et efficace.

Selon une forme de réalisation particulière, le moyen support comprend une pluralité de brins souples disposés en alignement. Cette caractéristique permet de s'adapter à tout type de crochets, indépendamment de leur non-répétabilité de conception. En effet, lorsque le moyen support, par exemple sous la forme d'une brosse ou d'un balai, est déplacé jusqu'à ce que les pièces échappent à l'emprise desdits crochets, certains crochets peuvent traverser ou pénétrer entre les brins, pour permettre l'opération de décrochage.

L'étape consistant à déposer les pièces sur un moyen de réception peut consister par exemple à faire basculer ledit moyen support pour laisser tomber les pièces sur ledit moyen de réception sous la forme d'un convoyeur par exemple.

Dans une forme de réalisation particulière du procédé de décrochage selon l'invention, l'opération consistant à déposer les pièces sur un moyen de réception consiste à les saisir, une à une, par l'intermédiaire d'un système polyarticulé comprenant un organe de préhension et assujetti à un premier système de vision agencé pour localiser en position et en orientation les pièces posées sur le moyen support, les pièces sont ensuite déposées une à une sur le moyen de réception.

La saisie d'une pièce se fait par l'intermédiaire de l'organe de préhension et est possible grâce aux informations récoltées par le premier système de vision. Les pièces saisies individuellement peuvent ensuite être traitées de toute manière désirée. En effet, le terme « moyen de réception » est à considérer au sens large. La pièce peut être positionnée dans un bac de traitement.

Par exemple, les pièces saisies sont positionnées sur un moyen de réception comprenant des alvéoles de réception, localisées en position et en orientation par l'intermédiaire d'un deuxième système de vision assujetti au système polyarticulé.

Les pièces saisies peuvent être de très petites tailles, et les alvéoles de réception peuvent être parfaitement ajustées à la taille desdites pièces et notamment comprendre une forme de réception complémentaire audite pièces de sorte que la dépose doit être extrêmement précise.

A cet effet, la position et l'orientation desdites pièces saisies sont de nouveau déterminées dans le repère du système polyarticulé, préalablement au positionnement des pièces dans les alvéoles, par l'intermédiaire d'un troisième système de vision assujetti audit système polyarticulé et monté sur une partie fixe par rapport audit système polyarticulé.

Selon l'invention, lorsque l'opération de décrochage est terminée pour une rangée de pièce, et que les pièces sont saisies ou déposées sur le moyen de réception, un deuxième système polyarticulé manipule le support plan de sorte à présenter une autre rangée ou partie de rangée de crochets devant le moyen support pour enchainer une autre opération de décrochage.

L'invention concerne également une installation selon la revendication 7 permettant la mise en oeuvre du procédé susmentionné.

A cet effet, l'installation comprend notamment :
- au moins un moyen support déplaçable automatiquement et de manière relative par rapport au support plan, d'une part, pour se positionner sous toute ou partie d'une rangée de crochets de manière à supporter lesdites pièces et, d'autre part, selon une trajectoire correspondant au profil général des crochets jusqu'à ce que lesdites pièces échappent à l'emprise desdits crochets et se retrouvent posées sur le moyen support, et ;
- des moyens pour déposer les pièces sur un moyen de réception.

Selon une forme de réalisation particulière, les moyens pour déposer les pièces sur un moyen de réception comprennent un système polyarticulé comprenant un organe de préhension pour saisir une pièce, et assujetti à un premier système de vision agencé pour localiser en position et en orientation les pièces posées sur le moyen support.

Avantageusement, l'installation comprend un deuxième système de vision, assujetti au système polyarticulé, pour localiser en position et en orientation une alvéole de réception de la pièce saisie de sorte à permettre au système polyarticulé de déposer la pièce saisie dans l'alvéole.

Pour améliorer la précision de la pose des pièces dans les alvéoles, l'installation comprend un troisième système de vision, monté de manière fixe par rapport au système polyarticulé, et assujetti à celui-ci pour déterminer à nouveau dans le repère du système polyarticulé la position et l'orientation de la pièce saisie.

Pour enchaîner de manière optimale les opérations de décrochage, l'installation comprend un deuxième système polyarticulé agencé pour manipuler le support plan de sorte à présenter une autre rangée ou partie de rangée de crochets devant le moyen support.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique en perspective de l'installation selon l'invention, avant l'opération de décrochage des pièces ;
- la figure 2 est une représentation schématique en perspective de l'installation illustrant le positionnement du moyen support sous une partie d'une rangée de crochets pour supporter lesdites pièces ;
- la figure 3 est une représentation schématique en perspective illustrant en détail le moyen support supportant lesdites pièces ;
- la figure 4 est une représentation schématique en perspective illustrant la saisie des pièces sur le moyen support par l'intermédiaire du système polyarticulé ;
- la figure 5 est une représentation schématique en perspective de l'installation, illustrant les systèmes de vision de ladite installation ;
- la figure 6 est une représentation schématique en perspective illustrant l'étape consistant à déterminer à nouveau la position et l'orientation des pièces saisies dans le repère du système polyarticulé, préalablement au positionnement des pièces dans les alvéoles ;
- la figure 7 est une représentation schématique en perspective illustrant la dépose des pièces dans les alvéoles.

### EXPOSE DETAILLE DE L'INVENTION

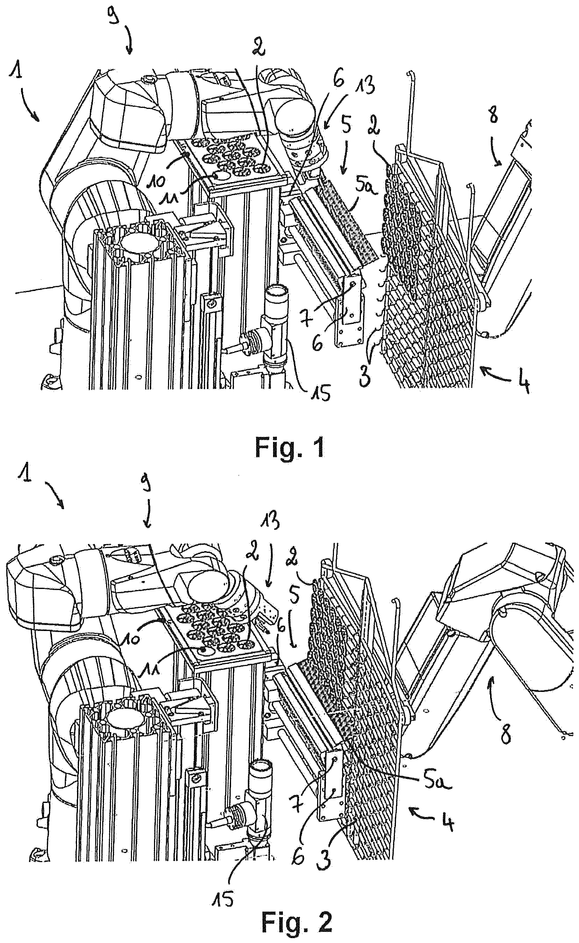

En référence aux figures 1 à 7 l'invention concerne un procédé et une installation (1) permettant le décrochage automatique de pièces (2) suspendues sur des crochets (3) répartis en rangées sur la surface d'un support plan (4).

Plus précisément et en référence à la figure 1, le support plan (4) comprend un cadre duquel s'étend la pluralité de crochets (3) recevant les pièces (2). Les crochets (3) sont des éléments filiformes permettant la suspension d'une pièce, et se présentent par exemple sous la forme de tiges, de griffes, d'épingles ou de crochets proprement dits.

Les pièces (2) suspendues peuvent être de tout type. Dans la forme de réalisation illustrée il s'agit de pièces (2) horlogères, tels que des cadrans suspendus aux crochets (3) par l'intermédiaire d'un orifice ménagé dans lesdits cadrans.

En référence à la figure 2, pour réaliser l'opération de décrochage des pièces (2) suspendues, l'installation (1) comprend au moins un moyen support (5) déplaçable automatiquement, et de manière relative par rapport au support plan (4), pour se positionner sous une partie d'une rangée de crochets (3) de manière à venir supporter lesdites pièces (2).

Avantageusement, le moyen support (5) comprend une pluralité de brins souples disposés en alignement, et se présente par exemple sous la forme d'une brosse (5a). Selon une forme de réalisation spécifique la brosse (5a) est montée rotative entre deux flasques (6) et autour d'un axe (7) parallèle aux rangées de crochets (3) du support plan (4), pour venir se positionner sous une partie d'une rangée de crochets (3).

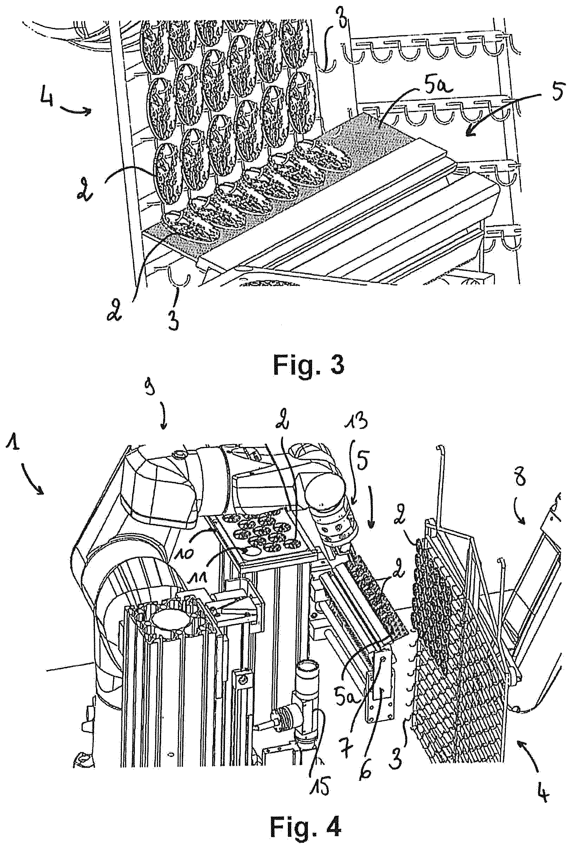

En référence à la figure 3, le support plan (4) est maintenu et manipulé par un système polyarticulé (8) agencé pour déplacer ledit support plan (4) et positionner une rangée de crochets (3) pourvus de pièces (2), à proximité immédiate de la brosse (5a), légèrement au-dessus de sorte que, par un mouvement de rotation, ladite brosse (5a) vient se positionner sous les pièces (2) jusqu'à venir les supporter.

En référence à la figure 4, la brosse (5a) est ensuite déplacée selon une trajectoire correspondant au profil général des crochets (3) jusqu'à ce que lesdites pièces (2) échappent à l'emprise des crochets (3) et se retrouvent posées sur la surface de ladite brosse (5a).

Bien entendu, les déplacements de la brosse (5a) peuvent être remplacés par des déplacements du support plan (4) par l'intermédiaire du système polyarticulé (8).

Les crochets (3) peuvent avoir des orientations légèrement différentes les uns des autres. Les poils souples de la brosse (5a) permettent de pallier à cet inconvénient de sorte que lors du déplacement de la brosse (5a), certain crochets (3) peuvent passer entre les brins de la brosse (5a). Ainsi, le décrochage est réalisé de manière optimale, indépendamment de la non-répétabilité d'orientation desdits crochets (3).

Après ce déplacement, les pièces (2) se retrouvent posées sur la surface de la brosse (5a). Un autre système polyarticulé (9), tel qu'un robot six axes, est agencé pour saisir, une à une, lesdites pièces (2) pour les déposer dans un moyen de réception (10) comprenant des alvéoles (11), par exemple de formes complémentaires aux pièces (2).

L'installation (1) peut, sans sortir du cadre de l'invention comprendre plusieurs brosses (5a) déplaçables pour décrocher une autre rangée de pièces (2) pendant que le système polyarticulé (9) saisie une à une les pièces (2) sur la première brosse (5a).

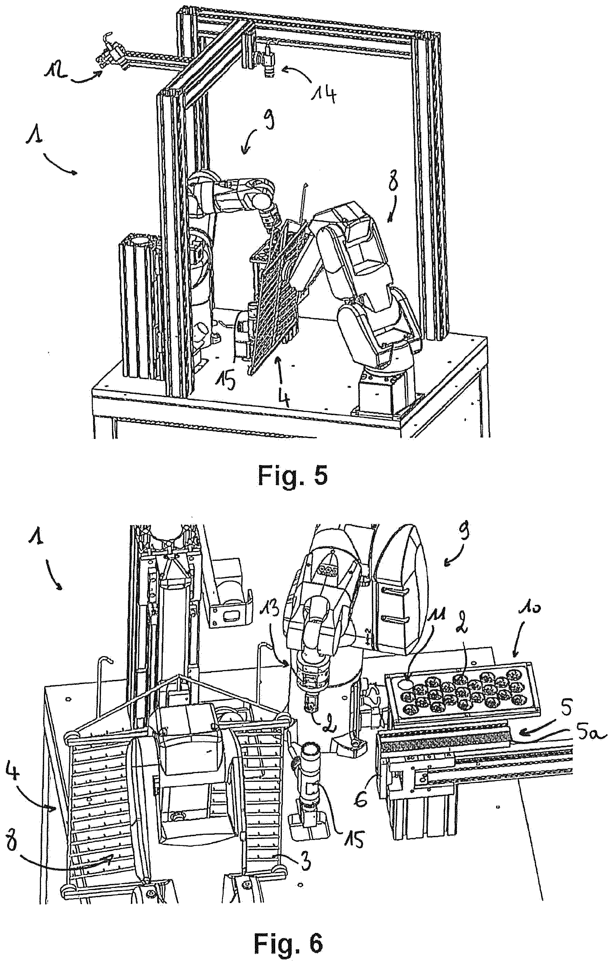

En référence à la figure 5, le système polyarticulé (9) est assujetti à un premier système de vision (12) destiné à localiser les pièces (2) en position et en orientation, posées sur la brosse (5a), pour permettre audit système polyarticulé (9) de saisir avec une orientation déterminée une pièce (2) à déposer dans une alvéole (11). Ce premier système de vision (12), par exemple à trois dimensions, comprend par exemple une caméra munie d'un système d'éclairage. La caméra visionne dans le plan de la brosse (5a) et enregistre des images de ladite brosse (5a) sur laquelle les pièces (2) à saisir sont posées. Les images sont ensuite numérisées pour être utilisables par un logiciel de traitement d'image qui détermine la position et l'orientation de la pièce (2) à saisir en fonction d'un repère lié au système polyarticulé (9). Lorsque le traitement de l'image est réalisé, les coordonnées de la pièce (2) sont envoyées au système polyarticulé (9) qui est apte à la saisir, dans une orientation définie pour la déposer dans une alvéole (11).

Pour saisir une pièce (2) posée sur la brosse (5a), le système polyarticulé (9) comprend un organe de préhension (13). Cet organe de préhension (13) est à définir selon la nature des pièces (2) à saisir. Dans une forme de réalisation préférée bien connue de l'Homme du Métier et illustrée aux figures, l'organe de préhension (13) se présente sous la forme d'un vérin muni d'une ventouse au travers de laquelle de l'air est aspiré. Le système polyarticulé (9) s'approche alors d'une pièce (2), le vérin est actionné de manière à faire descendre la ventouse à proximité de la pièce (2) et, au contact de la pièce (2), la ventouse se colle à celle-ci et la soulève par aspiration. Un élément de centrage de forme complémentaire à la pièce (2) est agencé autour de la ventouse et forme une sorte de compartiment de sorte que, lorsque le vérin remonte, la pièce (2) se loge dans ledit compartiment et se retrouve dans une orientation bien définie, permettant une dépose optimale de la pièce (2).

L'installation (1) comprend un deuxième système de vision (14) assujetti au système polyarticulé (9) pour localiser en position et en orientation les alvéoles (11) de réception des pièces (2). Le deuxième système de vision (14), par exemple à trois dimensions, est similaire au premier système de vision (12). Il se présente par exemple sous la forme d'une caméra apte à visionner dans le plan du moyen de réception (10) et enregistre des images des alvéoles (11) vides aptes à recevoir chacune une pièce (2). Les images sont ensuite numérisées pour être utilisables par un logiciel de traitement d'image qui détermine la position et l'orientation des alvéoles (11) en fonction d'un repère lié au système polyarticulé (9).

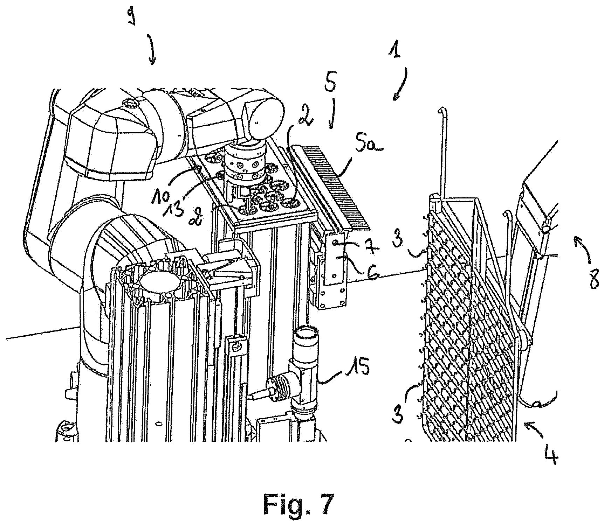

En référence à la figure 7, lorsque le traitement de l'image est réalisé, les coordonnées de l'alvéole (11) sont envoyées au système polyarticulé (9) qui est apte à déposer la pièce (2) saisie, dans une orientation définie, dans l'alvéole (11) vide correspondante localisée.

En fonction de l'application concernée, les pièces (2) saisies et les alvéoles (11) peuvent être de très petites tailles de sorte que la dépose nécessite une extrême précision. Dans cette configuration et en référence à la figure 6, l'installation (1) comprend un troisième système de vision (15) assujetti au système polyarticulé (8) et monté sur une partie fixe par rapport audit système polyarticulé (8). Ce troisième système de vision (15), par exemple sous la forme d'une caméra à trois dimensions, est destiné à déterminer de nouveau la position et l'orientation desdites pièces (2) saisies par le système polyarticulé (9), dans le repère dudit système polyarticulé (9), préalablement à la dépose des pièces (2) dans les alvéoles (11). A cet effet, chaque pièce (2) saisie par le système polyarticulé (9) est amenée au droit du troisième système de vision (15) pour la détermination proprement dite de la position et de l'orientation de la pièce (2) saisie dans le repère dudit système polyarticulé (9)

Lorsque les pièces (2) posées sur la brosse (5a) sont toutes saisies et déposées, le système polyarticulé (8) qui maintien le support plan (4), manipule et déplace ledit support plan (4) de sorte à présenter une autre rangée ou partie de rangée de crochets (3) devant la brosse (5a) pour enchainer une autre opération de décrochage. Ledit système polyarticulé (8) peut par exemple être assujetti à un automate afin que lorsque le système polyarticulé (9) a saisi toutes les pièces (2) présentes sur la brosse (5a), l'automate envoie un signal audit système polyarticulé (8) lui faisant positionner, à proximité de ladite brosse (5a), une nouvelle rangée de crochets (3) pourvus de pièces (2) à décrocher. Le positionnement du support plan (4) est avantageusement réalisé en temps masqué par rapport à la dépose de la dernière pièce (2) saisie par le système polyarticulé (9).

Lorsque toutes les pièces (2) ont été décrochées du support plan (4), le système polyarticulé (8) sort ledit support plan (4) de l'installation (1) et en saisi un nouveau. Cette opération est également avantageusement réalisée en temps masqué par rapport à la dépose de la dernière pièce (2) saisie par le système polyarticulé (9).

Comme il ressort de ce qui précède, l'invention fournit ainsi une installation (1) et un procédé de décrochage automatique de pièces (2) suspendues sur des crochets (3) répartis en rangées sur la surface d'un support plan (4). Plus particulièrement, l'installation (1) et le procédé permettent d'augmenter considérablement la rapidité de décrochage des pièces (2), améliorant ainsi la productivité d'une chaine de production par exemple. L'invention permet également d'automatiser lesdites opérations de décrochage de pièces (2) et notamment de s'adapter à la forme des crochets (3).

## Revendications

1. Procédé de décrochage automatique de pièces (2) suspendues sur des crochets (3) répartis en rangées sur la surface d'un support plan (4), ***caractérisé* en ce qu'**il comprend des étapes consistant à :
- positionner automatiquement au moins un moyen support (5) sous toute ou partie d'une rangée de crochets (3) pour supporter lesdites pièces (2), et ;
- déplacer automatiquement ledit moyen support (5), de manière relative par rapport au support plan (4), selon une trajectoire correspondant au profil général des crochets (3) jusqu'à ce que lesdites pièces (2) échappent à l'emprise desdits crochets (3), lesdites pièces (2) se retrouvant posées sur le moyen support (5);
- déposer lesdites pièces (2) sur un moyen de réception (10).

2. Procédé selon la revendication 1, ***caractérisé* en ce que** le moyen support (5) comprend une pluralité de brins souples disposés en alignement.

3. Procédé selon la revendication 1, ***caractérisé* en ce que** l'opération consistant à déposer les pièces (2) sur un moyen de réception (10) consiste à les saisir, une à une, par l'intermédiaire d'un système polyarticulé (9) comprenant un organe de préhension (13) et assujetti à un premier système de vision (12) agencé pour localiser en position et en orientation les pièces (2) posées sur le moyen support (5), les pièces (2) sont ensuite déposées une à une sur le moyen de réception (10).

4. Procédé selon la revendication 3, ***caractérisé* en ce que** les pièces (2) saisies sont positionnées sur un moyen de réception (10) comprenant des alvéoles (11) de réception, localisées en position et en orientation par l'intermédiaire d'un deuxième système de vision (14) assujetti au système polyarticulé (9).

5. Procédé selon la revendication 4, ***caractérisé* en ce que** la position et l'orientation desdites pièces (2) saisies sont de nouveau déterminées dans le repère du système polyarticulé (9), préalablement au positionnement des pièces (2) dans les alvéoles (11), par l'intermédiaire d'un troisième système de vision (15) assujetti audit système polyarticulé (9) et monté sur une partie fixe par rapport audit système polyarticulé (9).

6. Procédé selon la revendication 3, ***caractérisé* en ce que** lorsque les pièces (2) sont saisies, un deuxième système polyarticulé (8) manipule le support plan (4) de sorte à présenter une autre rangée ou partie de rangée de crochets (3) devant le moyen support (5) pour enchainer une autre opération de décrochage.

7. Installation (1) de décrochage automatique de pièces (2) suspendues sur des crochets (3) répartis en rangées sur la surface d'un support plan (4), ***caractérisée* en ce qu'**elle comprend :
- ledit support plan,
- lesdits crochets,
- au moins un moyen support (5),
- des moyens pour déplacer ledit moyen support automatiquement et de manière relative par rapport au support plan (4), d'une part pour le positionner sous toute ou partie d'une rangée de crochets (3) de manière à supporter lesdites pièces (2), et d'autre part, selon une trajectoire correspondant au profil général des crochets (3) jusqu'à ce que lesdites pièces (2) échappent à l'emprise desdits crochets (3) et se retrouvent posées sur ledit moyen support (5),
- un moyen de réception desdites pièces, et
- des moyens pour déposer lesdites pièces (2) sur ledit moyen de réception (10).

8. Installation (1) selon la revendication 7, ***caractérisée* en ce que** les moyens pour déposer les pièces (2) sur un moyen de réception (10) comprennent un système polyarticulé (9) comprenant un organe de préhension (13) pour saisir une pièce (2), et assujetti à un premier système de vision (12) agencé pour localiser en position et en orientation les pièces (2) posées sur le moyen support (5).

9. Installation (1) selon la revendication 8, ***caractérisée* en ce qu'**elle comprend un deuxième système de vision (14), assujetti au système polyarticulé (9), pour localiser en position et en orientation une alvéole (11) de réception de la pièce (2) saisie de sorte à permettre au système polyarticulé (9) de déposer la pièce (2) saisie dans l'alvéole (11).

10. Installation (1) selon la revendication 8, ***caractérisée* en ce qu'**elle comprend un troisième système de vision (15), monté de manière fixe par rapport au système polyarticulé (9), et assujetti à celui-ci pour déterminer de nouveau dans le repère du système polyarticulé (9) la position et l'orientation de la pièce (2) saisie.

11. Installation (1) selon la revendication 7, ***caractérisée* en ce qu'**elle comprend un deuxième système polyarticulé (8) agencé pour manipuler le support plan (4) de sorte à présenter une autre rangée ou partie de rangée de crochets (3) devant le moyen support (5) pour enchainer une autre opération de décrochage.

## Patentansprüche

1. Verfahren zum automatischen Loshaken von Teilen (2), die an Haken (3) aufgehängt sind, welche in Reihen an der Oberfläche eines ebenflächigen Trägers (4) angeordnet sind, ***dadurch gekennzeichnet,* dass** das Verfahren Schritte umfasst, die darin bestehen:
- mindestens ein Haltemittel (5) automatisch ganz oder teilweise unter eine Reihe von Haken (3) zum Halten der Teile (2) zu positionieren und;
- dieses Haltemittel (5) automatisch relativ zum ebenflächigen Träger (4) gemäß einem Verlauf zu bewegen, welcher dem allgemeinen Profil der Haken (3) entspricht, bis die Teile (2) außerhalb des Einflussbereichs der Haken (3) sind, wobei sich die Teile (2) dann auf dem Haltemittel (5) befinden;
- die Teile (2) auf ein Aufnahmemittel (10) abzulegen.

2. Verfahren nach Anspruch 1, ***dadurch gekennzeichnet,* dass** das Haltemittel (5) eine Vielzahl von flexiblen Strängen umfasst, die in Reihe zueinander angeordnet sind.

3. Verfahren nach Anspruch 1, ***dadurch gekennzeichnet,* dass** der Vorgang, welcher darin besteht, die Teile (2) auf ein Aufnahmemittel (10) abzulegen, darin besteht, diese einzeln über ein mehrgelenkiges System (9) zu erfassen, welches aus einem Greiforgan (13) besteht und an ein erstes Sichtprüfsystem (12) zur Lokalisierung in Position und in Ausrichtung der auf dem Haltemittel (5) abgelegten Teile (2) gekoppelt ist, wobei die Teile (2) anschließend einzeln auf das Aufnahmemittel (10) abgelegt werden.

4. Verfahren nach Anspruch 3, ***dadurch gekennzeichnet,* dass** die erfassten Teile (2) auf ein Aufnahmemittel (10) positioniert werden, das Aufnahmezellen (11) enthält, die über ein zweites, an das mehrgelenkige System (9) gekoppeltes Sichtprüfsystem (14) in Position und in Ausrichtung lokalisiert werden.

5. Verfahren nach Anspruch 4, ***dadurch gekennzeichnet,* dass** die Position und die Ausrichtung der erfassten Teile (2) vor dem Positionieren der Teile (2) in die Zellen (11) erneut im Koordinatensystem des mehrgelenkigen Systems (9) über ein drittes Sichtprüfsystem (15) bestimmt werden, welches an das mehrgelenkige System (9) gekoppelt und an einem feststehenden Teil bezogen auf das mehrgelenkige System (9) montiert ist.

6. Verfahren nach Anspruch 3, ***dadurch gekennzeichnet,* dass**, wenn die Teile (2) erfasst wurden, ein zweites mehrgelenkiges System (8) den ebenflächigen Träger (4) derart betätigt, dass eine weitere Hakenreihe (3) ganz oder teilweise vor dem Haltemittel (5) erscheint, um einen weiteren Loshak-Vorgang folgen zu lassen.

7. Vorrichtung (1) zum automatischen Loshaken von Teilen (2), die an Haken (3) aufgehängt sind, welche in Reihen an der Oberfläche eines ebenflächigen Trägers (4) angeordnet sind, ***dadurch gekennzeichnet,* dass** die Vorrichtung Folgendes umfasst:
- den ebenflächigen Träger,
- die Haken,
- mindestens ein Haltemittel (5),
- Mittel, um das Haltemittel automatisch und relativ bezogen auf den ebenflächigen Träger (4) zu bewegen, einerseits um ihn ganz oder teilweise unter eine Reihe von Haken (3) zum Halten der Teile (2) zu positionieren und anderseits gemäß einem Verlauf, welcher dem allgemeinen Profil der Haken (3) entspricht, bis die Teile (2) außerhalb des Einflussbereichs der Haken (3) sind und sich dann auf dem Haltemittel (5) befinden,
- ein Mittel zur Aufnahme der Teile und
- Mittel zum Ablegen der Teile (2) auf dieses Aufnahmemittel (10).

8. Vorrichtung (1) nach Anspruch 7, ***dadurch gekenntzeichnet**,* dass die Mittel zum Ablegen der Teile (2) auf ein Aufnahmemittel (10) ein mehrgelenkiges System (9) umfassen, welches ein Greiforgan (13) zum Erfassen eines Teils (2) umfasst und an ein erstes Sichtprüfsystem (12) gekoppelt ist, welches zum Lokalisieren in Position und in Ausrichtung der auf dem Haltemittel (5) abgelegten Teile (2) angeordnet ist.

9. Vorrichtung (1) nach Anspruch 8, ***dadurch gekennzeichnet,* dass** die Vorrichtung ein zweites, an das mehrgelenkige System (9) gekoppeltes Sichtprüfsystem (14) umfasst, um eine Zelle (11) zur Aufnahme des erfassten Teils (2) in Position und in Ausrichtung zu lokalisieren, so dass das mehrgelenkige System (9) das erfasste Teil (2) in die Zelle (11) ablegen kann.

10. Vorrichtung (1) nach Anspruch 8, ***dadurch gekennzeichnet,* dass** die Vorrichtung ein drittes, bezogen auf das mehrgelenkige System (9) feststehend montiertes und an dieses gekoppeltes Sichtprüfsystem (15) umfasst, um erneut im Koordinatensystem des mehrgelenkigen Systems (9) die Position und die Ausrichtung des erfassten Teils (2) zu bestimmen.

11. Vorrichtung (1) nach Anspruch 7, ***dadurch gekennzeichnet,* dass** die Vorrichtung ein zweites mehrgelenkiges System (8) umfasst, das so angeordnet ist, dass der ebenflächige Träger (4) derart betätigt wird, dass eine weitere Hakenreihe (3) ganz oder teilweise vor dem Haltemittel (5) erscheint, um einen weiteren Loshak-Vorgang folgen zu lassen.

## Claims

1. A method for automatically unhooking parts (2) suspended on hooks (3) distributed in rows on the surface of a flat support (4), ***characterized* in that** it comprises the steps of:
- automatically positioning at least one support means (5) under all or part of a row of hooks (3) for supporting said parts (2), and;
- automatically moving said support means (5), relative to the flat support (4), along a path corresponding to the general profile of the hooks (3) until said parts (2) escape from the hold of said hooks (3), said parts (2) being placed on the support means (5);
- depositing said parts (2) on a receiving means (10).

2. The method according to claim 1, ***characterized* in that** the support means (5) comprises a plurality of flexible strands arranged in alignment.

3. The method according to claim 1, ***characterized* in that** the operation consisting in depositing the parts (2) on a receiving means (10) consists in gripping them, one by one, via a polyarticulated system (9) comprising a gripping member (13) and secured to a first vision system (12) arranged to locate in position and orientation the parts (2) laid on the support means (5), and the parts (2) are then deposited one by one on the receiving means (10).

4. The method according to claim 3, ***characterized* in that** the parts (2) gripped are positioned on a receiving means (10) comprising receiving cells (11), located in position and orientation via a second vision system (14) secured to the polyarticulated system (9).

5. The method according to claim 4, ***characterized* in that** the position and the orientation of said parts (2) are again determined in the mark of the polyarticulated system (9), prior to the positioning of the parts (2) in the cells (11), via a third vision system (15) secured to said polyarticulated system (9) and mounted on a fixed part relative to said polyarticulated system (9).

6. The method according to claim 3, ***characterized* in that** when the parts (2) are gripped, a second polyarticulated system (8) manipulates the flat support (4) so as to have another row or part of a row of hooks (3) in front of the support means (5) to carry out a further unhooking operation.

7. A facility (1) for automatically unhooking parts (2) suspended on hooks (3) distributed in rows on the surface of a flat support (4), ***characterized* in that** it comprises:
- said flat support,
- said hooks,
- at least one support means (5),
- means for moving said support means automatically and relatively to the flat support (4), on the one hand, for positioning it under all or part of a row of hooks (3) so as to support said parts (2) and, on the other hand, according to a path corresponding to the general profile of the hooks (3) until said parts (2) escape from the hold of said hooks (3) and are placed on said support means (5), and;
- means for receiving said parts, and
- means for depositing said parts (2) on said receiving means (10).

8. Facility (1) according to claim 7, ***characterized* in that** the means for depositing the parts (2) on a receiving means (10) comprise a polyarticulated system (9) comprising a gripping member (13) for gripping a part (2), and secured to a first vision system (12) arranged to locate in position and orientation the parts (2) placed on the support means (5).

9. Facility (1) according to claim 8, ***characterized* in that** it comprises a second vision system (14), secured to the polyarticulated system (9), for locating in position and in orientation a cell (11) for receiving the part (2), so as to enable the polyarticulated system (9) to deposit the part (2) gripped in the cell (11).

10. Facility (1) according to claim 8, ***characterized* in that** it comprises a third vision system (15), fixedly mounted with respect to the polyarticulated system (9), and secured thereto for re-determining in the mark of the polyarticulated system (9) the position and orientation of the part (2) gripped.

11. Facility (1) according to claim 7, ***characterized* in that** it comprises a second polyarticulated system (8) arranged to manipulate the flat support (4) so as to have another row or part of a row of hooks (3) in front of the support means (5) to carry out a further unhooking operation.
